Europäisches Patentamt

European Patent Office

Office européen des brevets

(11) Veröffentlichungsnummer : **0 384 553 B1**

(12) **EUROPÄISCHE PATENTSCHRIFT**

(45) Veröffentlichungstag der Patentschrift :
14.07.93 Patentblatt 93/28

(51) Int. Cl.⁵ : **A23C 19/032**, A23C 19/16

(21) Anmeldenummer : **90250046.1**

(22) Anmeldetag : **14.02.90**

(54) **Verfahren zur Herstellung von Tilsiter und Käse nach Tilsiterart.**

(30) Priorität : **20.02.89 DE 3905499**

(43) Veröffentlichungstag der Anmeldung :
**29.08.90 Patentblatt 90/35**

(45) Bekanntmachung des Hinweises auf die
Patenterteilung :
**14.07.93 Patentblatt 93/28**

(84) Benannte Vertragsstaaten :
**AT CH DE DK FR GB LI NL SE**

(56) Entgegenhaltungen :
**EP-A- 0 232 649**
**EP-A- 0 240 607**
**FR-A- 1 566 447**
**FR-A- 2 112 090**
**FR-A- 2 132 149**
**US-A- 4 119 732**

(56) Entgegenhaltungen :
**VERPACKUNGS-MAGAZIN, Nr. 16, 1972, Sei-**
**ten 35-42; G. EFFENBERGER: "Reifen und**
**Verpacken von Tilsiter Käsen in Kunststoff-**
**Folien"**
**TASCHENBUCH FüR CHEMIKER UND PHYSI-**
**KER, SPRINGER 1967, P.I.1**

(73) Patentinhaber : **Grace GmbH**
**Erlengang 31**
**W-2000 Norderstedt (DE)**

(72) Erfinder : **Schmidt, Helga**
**Brahmsstrasse 43**
**2190 Cuxhaven (DE)**
Erfinder : **Philipp, Siegbert**
**Birkenweg 1b**
**2260 Niebüll (DE)**

(74) Vertreter : **UEXKÜLL & STOLBERG**
**Patentanwälte**
**Beselerstrasse 4**
**W-2000 Hamburg 52 (DE)**

**Beschreibung**

Die Erfindung betrifft ein verbessertes Verfahren zur Herstellung von Tilsiter und Käse nach Tilsiterart, welches gegenüber herkömmlichen Verfahren zu einer bedeutenden Rationalisierung und zu erhöhter Wirtschaftlichkeit der Käsereifung führt.

Die Begriffe "Tilsiter" und "Käse nach Tilsiterart" schließen erfindungsgemäß solche Käse ein, deren Inneres elfenbeinfarbig bis gelb ist und Löcher von Schlitz- oder Gerstenform aufweist, wobei daneben auch runde Löcher auftreten können, und die einen geschmeidigen nicht kurzen oder bröckeligen Teig besitzen. Der Geschmack des erfindungsgemäßen Käses entspricht im wesentlichen dem arttypischen Geschmack von Tilsiter aus konventioneller Herstellung, wobei jedoch ein weniger strenger Geruch angestrebt ist.

Bei konventioneller Herstellung dieses Käsetyps erfolgt die Aromabildung durch Oberflächenbehandlung der geformten Käsemasse mit sogenannter Rotschmiere, wobei der obligat aerobe Brevibacterium linens als wesentlicher Aromaspender angesehen wird. Nach Dicklegung der Milch, Zerkleinern, Abpressen und Formen des Käsebruchs und Salzen der geformten Käsemasse erfolgt die Reifung in speziellen Reiferäumen mit kontrollierter Raumfeuchtigkeit und Temperatur durch aufwendige Oberflächenbehandlung, das sogenannte "Schmieren". Zu diesem Zweck wird zunächst die Käseoberfläche gereinigt und anschließend mit der Oberflächenkultur geschmiert. Dieser Vorgang muß im Rhythmus von 2 bis 3 Tagen wiederholt werden, wobei die Gesamtreifungsdauer etwa 5 bis 6 Wochen beträgt. Das traditionelle Verfahren ist wegen der personalaufwendigen Käsepflege in speziellen Reifungsräumen einerseits und der Gewichtsverluste während der wochenlangen Reifung andererseits außerordentlich kostenintensiv und unter marktwirtschaftlichen Gesichtspunkten nicht mehr rentabel.

Die schon seit langem bekannte Herstellung von rindenlosem Käse durch Reifung in Folien unter Luftabschluß ist bisher mit Erfolg nur bei Käsesorten angewendet worden, deren Reifung und Aromabildung durch anaerobe Mikroorganismen verursacht wird, d.h. bei der Gruppe der nicht-oberflächenbehandelten Hart-, Schnitt- und halbfesten Schnittkäse.

Es ist auch versucht worden, Tilsiter im Folienreifungsverfahren herzustellen. Zu diesem Zweck wurde die Käsemasse traditionell mit den üblichen Grundkulturen zubereitet, jedoch unter Verzicht auf eine Oberflächenbehandlung direkt nach dem Salzen in Folien verpackt und einer mehrwöchigen Reifung unterzogen (vgl. beispielsweise Deutsche Molkereizeitung, F.50/1970, Seiten 2357 - 2360). Es zeigte sich jedoch, daß der erhaltene Käse einen flachen und nicht arttypischen Geschmack aufwies.

Um das Produkt zu verbessern, ist ferner versucht worden, das traditionelle Reifungsverfahren mit der Folienreifung zu kombinieren. Bei diesem Verfahren wurde der Käse zunächst etwa 2 Wochen lang in herkömmlicher Weise geschmiert, dann gewaschen und anschließend in Folien verpackt. Auch dem auf diese Weise hergestellten Käse fehlen jedoch die für einen Markentilsiter (vgl. Beispiel 2) erforderlichen Geschmackseigenschaften, und er weist nach wie vor einen sehr strengen Geruch auf. Zudem fallen die hohen Kosten für die Pflege und Lagerhaltung während des Schmierens ebenfalls an.

Aufgabe der Erfindung ist es demgemäß, ein Verfahren zur rationellen und wirtschaftlichen Herstellung von Tilsiter und Käse nach Tilsiterart zu schaffen, welcher die geschmacklichen Anforderungen an einen Markenkäse erfüllt, ohne einen unerwünscht strengen Geruch aufzuweisen.

Zur Lösung der Aufgabe wird das erfindungsgemäße Verfahren vorgeschlagen, bei dem man der Kesselmilch neben den üblichen Grundkulturen (Säureweckern) zusätzlich die erfindungsgemäß definierten Mikroorganismen beimischt und die Reifung in den erfindungsgemäßen Spezial-Folien erfolgen läßt.

Überraschenderweise hat es sich erfindungsgemäß gezeigt, daß man die spezielle, bisher nur durch Oberflächenbehandlung erzielbare Aromabildung bei der Reifung von Tilsiter von innen her erfolgen lassen kann, wenn man der Kesselmilch zusätzlich Lactobacillen, vorzugsweise in Kombination mit weiteren, nachfolgend im einzelnen definierten Mikroorganismen beimischt und die Käsemasse für die Reifung unmittelbar im Anschluß an das Salzen in Spezialfolien verpackt, deren Gasdurchlässigkeit gemessen nach Oxtran für $O_2$ 80-600 und für $CO_2$ 300-3000 cm$^3$/m$^2$ x d x bar beträgt und die eine Wasserdampfdurchlässigkeit von maximal 25 g/m$^2 \cdot$d gemessen nach ASTM (ASTM-Norm Nr. E96-63T) bei 38°C und 90% relativer Feuchte aufweisen. Überraschenderweise lassen derartige Folien die Diffusion des $CO_2$ aus dem Inneren ohne die Erzeugung eines Überdruckes zu und erlauben gleichzeitig das Eindiffundieren einer solchen Menge an Sauerstoff, daß die Aromabildung unterstützt und die Schimmelbildung auf der Käseoberfläche verhindert wird. Erfindungsgemäß stellt sich ein Diffusionsgleichgewicht ein, bei welchem unerwünschte Bläheffekte und zu starke, nicht typische Lochbildung vermieden werden, gleichzeitig jedoch bei guter Aromaentwicklung dem Austrocknen und Oberflächenkontaminationen entgegengewirkt wird.

Zur Durchführung des erfindungsgemäßen Verfahrens sind mehrlagige Folien bevorzugt. Diese können mindestens eine äußere Polymerschicht und eine innere, wärmeversiegelbare Schicht sowie gegebenenfalls eine zwischen diesen Schichten angeordnete Gassperrschicht aufweisen. Gemäß einer besonders bevorzugten Ausführungsform der Erfindung werden schrumpfbare Folien mit einer Schrumpfrate von 10 bis 60, vorzugsweise 30 bis 50% verwendet.

Beispiele für dreilagige Folien sind solche, die eine Innenschicht aus einem Ethylenvinylacetat (EVA), eine Gassperrschicht aus beispielsweise weichgemachtem Vinylidenchlorid-Vinylchlorid (VDC-VC)-Copolymeren oder Ethylen-vinylalkolhol-Copolymeren (EV-OH) und eine Außenschicht aus EVA aufweisen.

Die Innenschicht kann ferner ein Ionomer enthalten oder aus diesem bestehen, die Gassperrschicht kann beispielsweise auch aus PVDC oder teilweise hydrolysiertem EVA (EV-OH) allein bestehen und zwischen den Außen- und Innenschichten und der Gassperrschicht können jeweils Klebschichten aus beispielsweise EVA vorgesehen sein.

Die Innenschicht der Folien sollte so beschaffen sein, daß auch in Gegenwart von Fettkontaminationen eine gleichmäßige Versiegelung erreicht wird.

In diesem Zusammenhang haben sich Folien besonders bewährt, deren innere Schicht aus einem Copolymeren von Ethylen und einem $\alpha$-Olefin mit 4 bis 8 Kohlenstoffatomen je Molekül besteht, wobei das Copolymere eine Dichte von weniger als 920 kg/m³ aufweist.

Nähere Einzelheiten zu derartigen Folien finden sich in der EP-A-217 252, deren Offenbarung ausdrücklich in die vorliegende Beschreibung einbezogen wird.

Vorzugsweise werden erfindungsgemäß co-extrudierte vier- und mehrschichtige, wie beispielsweise sechsschichtige Laminatfolien, vorzugsweise in Form von Schrumpffolien verwendet, die zusätzlich molekularvernetzt sind. Die Molekularvernetzung kann beispielsweise durch Bestrahlen vorgenommen werden.

Geeignete sechsschichtige Folien können eine innere Schicht aus LLDPE (linear low density polyethylene) oder VLDPE (very low density polyethylene) oder Mischungen derselben, eine darauffolgende EVA-Schicht, eine anschließende Klebschicht, eine Mittelschicht aus EV-OH allein oder Mischungen desselben mit einem Polyamid, wie beispielsweise Nylon 126, eine daran anschließende weitere Klebschicht und eine Außenschicht aus EVA aufweisen.

Beispiele für geeignete vierschichtige Folien sind solche, deren innere Schicht (A) aus einem Copolymeren von VLDPE mit etwa 7 bis 25% eines $\alpha$-Olefins wie 1-Octen, bezogen auf das Copolymere, besteht. Die daran angrenzende Schicht (B) kann aus einem Ethylenvinylacetat-Copolymeren mit 5 bis 30, vorzugsweise 5 bis 15% Vinylacetat (VA) bestehen und die darauffolgende Schicht (C) aus einem Vinylidenchlorid-Vinylchlorid-(VDC-VC)Copolymeren mit 5 bis 30% VC oder Ethylen-Vinylalkohol-Copolymeren (EV-OH) sowie üblichen Zusatzstoffen wie Polybutylenglykolester, einem Polyester von Propylenglykol und Adipinsaure und einem Epoxidharz. Die äußere Schicht (D) entspricht in ihrer Zusammensetzung der mittleren Schicht (B). Die Gesamtdicke derartiger Folien beträgt etwa 45 bis 75 $\mu$m, vorzugsweise 50 bis 65 $\mu$m und in besonders bevorzugter Weise 57 bis 62 $\mu$m. Der Anteil der Schicht (A) an der Gesamtdicke der erfindungsgemäß besonders bevorzugten Folie kann 5 bis 15, vorzugsweise 8 bis 12 und in besonders bevorzugter Weise 10 $\mu$m betragen. Der Anteil der Schicht (B) kann 20 bis 35, vorzugsweise 25 bis 30 und in besonders bevorzugter Weise 27 $\mu$m betragen. Der Anteil der Schicht (C) kann 2 bis 8, vorzugsweise 3 bis 7 und in besonders bevorzugter Weise 4 bis 6 $\mu$m und der Anteil der Außenschicht (D) kann 10 bis 25, vorzugsweise 15 bis 20 und in besonders bevorzugter Weise 16 bis 18 $\mu$m betragen.

Beispiele für die Zusammensetzung erfindungsgemäß geeigneter Folien I bis III sind in Tabelle I wiedergegeben.

EP 0 384 553 B1

## Tabelle I

| Schicht | Rohstoff | I | | II | | III | |
|---------|----------|-----|--------|-----|--------|-----|--------|
| | | µm | Gew.%* | µm | Gew.%* | µm | Gew.%* |
| Innen (A) | VLDPE/19% 1-Octen (Stamylex 08-076, DSM NL) | 10 | 15 | 10 | 15 | 10 | 15 |
| Mitte (B) | Ethylenvinylacetat/9% VA (Evatane V1020 VN3 Atochem FR oder Escorene Ultra Ex 363 BA Exxon Chemical BE) | 27 | 43 | 27 | 43 | 27 | 44 |
| Mitte (C) | Mischung aus: | 6 | 16,0 | 5 | 15,5 | 4 | 12,0 |
| | (1.) VDC-VC-Copol./22,5% VC (Ixan WV 320, Solvay BE) | | 14,6 | | 3,4 | | 10,5 |
| | (2.) Polybutylenglycolester (Priplast 3132, Unichema NL) | | 0,8 | | 1,0 | | 0,9 |
| | (3.) Polyester Propylenglcol/ Adipinsäure (Hallo HA-7A, C.P.Hall, USA) | | 0,5 | | 0,5 | | 0,5 |
| | (4.) Epoxidharz (DER 331, Dow Chem. CH) | | 0,1 | | 0,1 | | 0,1 |
| Außen (D) | (vergl. (B) ) | 16 | 26 | 17 | 27 | 18 | 29 |

*Gew.% bezogen auf Gesamtfolie

EP 0 384 553 B1

Diese Folien weisen eine $O_2$-Durchlässigkeit von 100 bis 300, vorzugsweise von 150 bis 200 und eine $CO_2$-Durchlässigkeit von 900 bis 1300, vorzugsweise von 1000 bis 1200 cm³/m² x d x bar und eine Wasserdampfdurchlässigkeit von 9 bis 13, vorzugsweise von 11 bis 12 g/m² x d auf. Ihre Schrumpfrate beträgt in Längsrichtung etwa 30 bis 40, vorzugsweise 35 und in Querrichtung etwa 40 bis 50, vorzugsweise 45%.

Die besonders bevorzugte Folie I gemäß Tabelle I weist eine $O_2$-Durchlässigkeit von etwa 175 und eine $CO_2$-Durchlässigkeit von etwa 1100 cm³/m² x d x bar und eine Wasserdampfdurchlässigkeit von etwa 11,5 g/m² x d auf.

Die erfindungsgemäß verwendeten Folien lassen überraschenderweise einen für die typische Tilsiter-Geschmacksausbildung und das Entstehen der Schlitzlochung erforderlichen Reifungsverlauf zu, bei dem die entstehenden Gase, in erster Linie $CO_2$ und Propionsäure, in ausreichendem Maße abdiffundieren können. Anders als bisher im Stand der Technik empfohlen (vgl. Deutsche Molkereizeitung a.a.O.) lassen sie jedoch eine solche Menge Sauerstoff passieren, daß die Aromabildung unterstützt und das Wachstum von Schimmel auf der Käseoberfläche vermieden wird. Schließlich hat es sich gezeigt, daß durch die Auswahl von Folien mit einer Wasserdampfdurchlässigkeit innerhalb der angegebenen Grenzen eine optimale Käseoberfläche erhalten wird. Bei einer Wasserdampfdurchlässigkeit von mehr als 25 g/m² muß mit Gewichtsverlusten, Rindenbildung und Schimmel gerechnet werden, während unterhalb von etwa 5 g/m² die Käseoberflaäche schmierig werden kann.

Für die optimale Durchführung des Reifungsverfahrens ist es ferner erforderlich, daß die Folie den Käse hauteng umschließt. Auf diese Weise können Lufteinschlüsse verhindert werden, die ihrerseits die Schimmelbildung und einen unkontrollierten Reifeverlauf begünstigen. Die eng anliegende Folie bietet zusätzlich Schutz gegenüber Kontaminationen, wenn die Brote im Handel aufgeschnitten werden.

Für einen optimalen Reifungsverlauf ist es ferner erforderlich, daß die Versiegelung der Folien keinerlei Fehlstellen aufweist.

Das Zusammenwirken der gewählten Foliencharakteristika erlaubt einen Reifungsverlauf der die erfindungsgemäß verwendeten Mikroorganismen enthaltenden Käsemasse, an dessen Ende ein rindenloser Tilsiterkäse oder Käse nach Tilsiterart mit den wohlausgewogenen Geschmackseigenschaften eines Markenkäses und ausgezeichneter Konsistenz steht, welcher jedoch den unerwünscht strengen Geruch des traditionellen Tilsiters nicht aufweist.

Erfindungsgemäß werden der Kesselmilch Lactobacillen in einer Menge von $10^3$ bis $10^8$ Zellen/ml Kesselmilch zugesetzt. Geeignete Species von Lactobacillus sind L. helveticus, L. delbrückii, Subspecies bulgaricus oder Subspecies lactis, L. plantarum, L. fermentum oder L. pseudoplantarum. L. helveticus und/oder L. delbrückii, Subspecies bulgaricus oder Subspecies lactis sind besonders bevorzugt. Die Verwendung von Lactobacillen allein führt zu einem verhältnismäßig milden Käse nach Tilsiterart mit rundem, vollmundigem Geschmack.

Gemäß einer besonders bevorzugten Ausführungsform der Erfindung werden der Kesselmilch Lactobacillen, insbesondere L. helveticus und/oder L. delbrückii Subspecies bulgaricus oder lactis in Kombination mit Kulturen von Bakterien der Gattung Brevibacterium und/oder Athrobacter in einer Menge von $10^3$ bis $10^8$ Zellen/ml bezogen auf die Kesselmilch zugesetzt.

Bevorzugte Arten von Brevibacterium sind B. linens und B. casei.

Überraschenderweise führt insbesondere die Kombination von Lactobacillen mit dem obligat aeroben Brevibacterium linens unter den erfindungsgemäß gewählten Bedingungen zur Ausbildung des typischen, pikanteren Tilsiteraromas.

Zur weiteren Geschmacksmodifikation können ferner Kulturen von Geotrichum und/oder Hefen in Mengen von $10^2$ bis $10^6$ Zellen/ml bezogen auf die Kesselmilch eingesetzt werden. Als Vertreter von Geotrichum hat sich Geotrichum candidum und als Hefe Debaromyces hansenii besonders bewährt.

Gemäß einer besonders bevorzugten Ausführungsform der Erfindung werden der Kesselmilch eine Kombination von Lactobacillus helveticus und Brevibacterium linens jeweils in einer Menge von $10^3$ bis $10^7$ Zellen/ml Kesselmilch sowie Geotrichum candidum in einer Menge von $10^2$ bis $10^5$ Zellen/ml Kesselmilch zugesetzt.

Sämtliche der oben genannten Mikroorganismen sind im Handel erhältlich und können als handelsübliche Stämme erfolgreich in dem erfindungsgemäßen Verfahren eingesetzt werden. Ferner sind am 5.2.1989 die nachfolgend angegebenen Mikroorganismenstämme bei der Deutschen Sammlung von Mikroorganismen und Zellkulturen GmbH (DSM) nach den Regeln des Budapester Übereinkommens unter den jeweils angegebenen Nummern hinterlegt worden:

1. Lactobacillus helveticus DSM 5780,
2. Brevibacterium linens DSM 5781,
3. Geotrichum candidum DSM 5775 und
4. Debaromyces hansenii DSM 5774.

Das erfindungsgemäße Verfahren kann ausgeführt werden, indem man zunächst in herkömmlicher Weise beispielsweise thermisierte und/oder baktofugierte Rohmilch in einen Kesselmilchtank einlagert, wobei der pH-Wert der Kesselmilch etwa 6,4 bis 6,8 und der Eiweißtiter etwa 2,8 bis 4,0 betragen sollten und der Fettgehalt so gewählt werden sollte, daß ein Endprodukt im Bereich von etwa 20 bis 60% Fett i.Tr. erhalten wird.

Die Milch wird anschließend in einen handelsüblichen Käsefertiger überführt und gleichzeitig mit einem üblichen Säurewecker für die Herstellung von Tilsiter homogen vermischt. Als Säurewecker kann beispielsweise das Präparat "Probat 505" der Firma Wiesby eingesetzt werden. Das Präparat enthält Streptococcus lactis, Streptococcus cremoris, Streptococcus lactis Subspecies diacetylactis und Leuconostoc mesenteroides Subspecies cremoris und wird in einer solchen Menge eingesetzt, daß die Gesamtzellzahl in der Kesselmilch etwa $10^5$ bis $10^7$ Zellen/ml beträgt.

Der Milch können ferner übliche Zusätze wie beispielsweise Calciumchlorid und Salpeter sowie erforderlichenfalls Farbzusätze wie Carotin zugegeben werden.

Zum Schluß werden die erfindungsgemäßen Spezialkulturen in der oben angegebenen Menge zu der Kesselmilch gegeben und die Milch bei etwa 30 bis 32°C vorzugsweise mit Flüssiglab (Labstärke 1:15 000) oder Pulverlab dickgelegt.

Die zum guten Ausdicken der Kesselmilch erforderliche Zeit wird durch die verwendete Labmenge bestimmt; sie beträgt normalerweise etwa 35 bis 40 Minuten.

Die erhaltene Gallerte wird nunmehr auf bekannte Weise mit dem Schneiderahmen des Rührwerks zerkleinert, wobei man zunächst einen kreisenden Schnitt anlegt bis sich etwas Molke gezeigt hat. Anschließend beginnt man mit dem eigentlichen Bruchmachen, und es sollte innerhalb von 20 Minuten die gewünschte Bruchgröße erreicht werden. Erfindungsgemäß sollte der Käsebruch etwa Erbsenkerngröße aufweisen, wobei eine gleichmäßige Zerkleinerung dadurch erreicht werden kann, daß man die Umdrehungsgeschwindigkeit der Schneidewerkzeuge in Abhängigkeit von der Festigkeit des Bruchs langsam steigert. Beispielsweise können die erste und die zweite Stufe 5 Minuten lang bei 25% der vollen Umdrehungsgeschwindigkeit und die dritte Stufe 10 Minuten lang bei 35% gefahren werden.

Üblicherweise hat der Bruch nach 20 Minuten ausreichend gekernt, um das Abziehen eines großen Teils der Molke über ein Sieb zu erlauben. Der Säuregrad der Molke sollte bei 4,6 und deren pH-Wert bei 6,4 liegen.

Im allgemeinen wird der Bruch nochmals mit Wasser bei erhöhter Temperatur, wie beispielsweise 80°C gewaschen und auf 36 bis 37°C nachgewärmt.

Im Anschluß an diese Behandlung kann nochmals Molke abgezogen werden, wobei in diesem Stadium der pH-Wert der Molke, normalerweise zwischen 6,2 und 6,3 liegt.

Vorzugsweise sollte der so erhaltene Käsebruch kernig und griffig sein. Durch festes Zusammendrücken in der Hand sollte er sich zusammenballen und beim anschließenden Verreiben wieder in die einzelnen Bruchkörner zerfallen. Ist dieser Zustand erreicht, so wird der Bruch in Formen abgefüllt, damit viel Luft zwischen die Bruchkörner gelangt. Diese Maßnahme fördert das Entstehen der typischen Tilsiter-Schlitzlochung. Um eine gleichmäßige Lochung zu erhalten, sollte das Abfüllen in einem Guß erfolgen. Anschließend kann die Käsemasse in Formen gepreßt werden. Die geformten Käselaibe können einige Stunden in einem Wasserbad gelagert und anschließend gesalzen werden. Die Einlagerung in Salzbadwannen kann ohne Wenden der Brote erfolgen. Vorzugsweise wird eine Salzlake von etwa 20 Bé verwendet und die Brote sollten so eingelagert werden, daß sie lose schwimmen können. Der pH-Wert einer derartigen Salzlake beträgt etwa 5,O bis 5,2. Nach etwa 24 Stunden sollten die Käselaibe einen pH-Wert von 5,1 bis 5,3, vorzugsweise 5,2, erreicht haben, und sie können dann entnommen werden.

Es ist ein besonderer Vorteil des erfindungsgemäßen Verfahrens, daß die Käselaibe feucht verpackt werden können. Es ist nur ein kurzes Abtrocknen erforderlich, und die relativ feuchte Oberfläche bietet sogar einen gewissen Schutz gegenüber dem Wachstum von Oberflächenkontaminationen.

Das Einbeuteln der Brote erfolgt vorzugsweise mit einem Beutelfüllgerat, um auch hier soweit wie möglich Kontaminationen auszuschalten.

Das anschließende Entfernen der Luft aus dem Beutel muß erfindungsgemäß unter schonenden Bedingungen erfolgen, um das Entstehen der Schlitzlochung während der Reifung nicht zu gefährden. Vorzugsweise sollte in dieser Stufe mit einem Beutelinnendruck von 400 bis 700 mbar absolut gearbeitet werden.

Das Verschließen der Beutel kann sowohl durch Siegeln als auch durch einen Clipverschluß erfolgen. Anschließend wird die Folie entweder im Wasserbad oder im Schrumpftunnel auf bekannte Weise auf die Käsebrote geschrumpft. Die Folie sollte wie eine zweite Haut an der Käseoberfläche anliegen.

Die noch anhaftenden Wassertropfen können beispielsweise mit einem Cryovac®-Abblasgerat entfernt werden, um das Auszeichnen der einzelnen Käsebrote nach Gewicht und die direkte Verpackung in Kartons zu ermöglichen.

Die Reifung des Käses kann nunmehr in einem gewöhnlichen Lagerraum bei Temperaturen von beispielsweise 5 bis 25°C, vorzugsweise bei 8 bis 12°C, erfolgen. Die Reifezeit beträgt abhängig von der Temperatur etwa 4 bis 8 Wochen, wobei jedoch die Lagerung bis zu mehreren Monaten, wie beispielsweise bis zu 8 Monaten, ausgedehnt werden kann.

Gegenüber dem herkömmlichen Verfahren zur Herstellung von Tilsiter bietet die erfindungsgemäße Verfahrensweise gravierende Vorteile. Die kosten- und personalaufwendige Oberflächenbehandlung in speziellen Reiferäumen entfällt, und es wird ein Käse erhalten, der in jeder Hinsicht die Verbrauchererwartungen an einen guten Tilsiter oder Käse nach Tilsiterart erfüllt (vgl. Beispiel 2, insbesondere Tabelle II). Durch Variation der Gesamtmenge und der mengenmäßigen Zusammensetzung der der Kesselmilch zugesetzten Spezialkulturen kann zudem das Aroma des hergestellten Käses reproduzierbar gesteuert werden, und es können auf diese Weise auch mildere Tilsiterarten erzeugt werden, wie sie zunehmend vom Verbraucher bevorzugt werden. Ein besonderer Vorteil des nach dem erfindungsgemäßen Verfahren hergestellten Käses besteht darin, daß dieser den arttypischen Geschmack von konventionellem Tilsiter aufweist, ohne dessen unerwünschten Geruch zu besitzen.

Die Erfindung wird nachfolgend anhand von Beispielen erläutert.

**Beispiel 1**

15 000 l Rohmilch wurden 15 Sekunden lang bei 67 bis 68°C thermisiert und baktofugiert und anschließend in einen Kesselmilchtank eingelagert. Der pH-Wert der Kesselmilch betrug etwa 6,5.

Man ließ die Milch anschließend in einen Käsefertiger mit angeschlossener Gadanpresse laufen, wobei unmittelbar vor dem Käsefertiger nochmals eine 15 Sekunden lange Wärmebehandlung bei 71°C durchgeführt wurde.

Während des Einlaufens der Kesselmilch in den Käsefermenter wurde eine flüssige Säuerungskultur (Probat 505, Fa. Wiesby) aus etwa 70 % Streptococcus cremoris und Streptococcus lactis, etwa 5 % Streptococcus lactis Subspecies diacetylactis und etwa 25 % Leuconostoc cremoris als Grundkultur in einer Menge von 160 Liter zugegeben und homogen mit der einlaufenden Kesselmilch verrührt, um eine gleichmäßige Durchsäuerung herbeizuführen. Der pH-Wert des Säureweckers betrug etwa 4,6.

Ferner wurden der Kesselmilch 4,5 kg Calciumchlorid zur Verbesserung der Labfähigkeit und 2,55 kg Natriumnitrat zum Unterdrücken von Blähungen sowie 2,55 kg Carotin als Färbemittel zugesetzt und gleichmäßig vermischt.

Anschließend wurde die Mischung mit einer Mischkultur aus 7500 ml Brevibacterium linens ($5 \times 10^5$ Zellen/ml Kesselmilch), 750 ml Geotrichum candidum ($5 \times 10^3$ Zellen/ml Kesselmilch) und 1,5 kg einer tiefgefrorenen Kultur von Lactobacillus helveticus ($2 \times 10^6$ Zellen/ml Kesselmilch) versetzt.

Nach gründlichem Vermischen wurde der Ansatz dann mit 4,2 kg Flüssiglab (Labstarke 1:15 000) bei 30 bis 32°C eingelabt. Die Gerinnungszeit betrug 17 Minuten und die Gesamtverdickungsdauer etwa 35 bis 40 Minuten.

Die Gallerte wurde anschließend zunächst mit dem Schneiderahmen des Rührwerks durch einen kreisrunden Schnitt zerteilt und nach Austreten der ersten Molke wurde mit dem eigentlichen Bruchmachen begonnen. Innerhalb von 20 Minuten wurde der Bruch auf Erbsenkerngröße zerkleinert, wobei die Umdrehungsgeschwindigkeit der Schneidewerkzeuge langsam auf 35% gesteigert wurde.

Nach einer anschließenden Standzeit von etwa 20 Minuten konnten 6000 Liter Molke über ein Sieb abgezogen werden.

Der Bruch wurde anschließend mit 1500 Litern Wasser bei einer Temperatur von 80°C und einer Rührgeschwindigkeit von 65% gewaschen und die Mischung anschließend 50 Minuten lang bei 37°C nachgewärmt.

Im Anschluß an diese Behandlung wurden nochmals 2000 Liter Molke abgezogen.

Der erhaltene Bruch war kernig und griffig. Er wurde anschließend locker über ein Schüttelsieb aus dem Käsefertiger in Preßwannen abgefüllt. In diesem Verfahrensschritt floß nochmals ein Teil Molke ab.

In der Preßwanne wurde die Masse 7 Minuten lang bei 6 bar vorgepreßt und anschließend mit einer Formpresse 3 Minuten lang mit einem Anfangsdruck von O,3 bar und anschließend 10 Minuten lang mit einem Hochpreßdruck von O,6 bar bearbeitet. Es wurden insgesamt 360 Käsebrote mit einem Gewicht von jeweils etwa 4 kg hergestellt. Der pH-Wert der Käsemasse betrug 5,3.

Die Brote wurden ca. 3 Stunden lang in ein Wasserbad von etwa von 30°C und anschließend 40 Stunden lang in ein Salzbad eingelagert. Die Konzentration der Salzlake entsprach 19,5 Bé.

Anschließend wurden die Brote nach kurzer Trockenzeit direkt der Verpackung zugeführt. Der pH-Wert der Käsemasse betrug in diesem Stadium 5,16.

Die Brote wurden einzeln mit einer automatischen Abfüllvorrichtung in Beutel aus der in Tabelle I mit I bezeichneten Folie überführt. Die Luft aus dem Beutel wurde unter schonendem Vakuum bis zu einem Beutelinnendruck von 500 mbar absolut entfernt und die Beutel durch Siegeln verschlossen.

Die Folie wurde anschließend bei 85°C im Schrumpftunnel auf die Käsebrote geschrumpft und letztere in Kartons verpackt.

**Beispiel 2**

Die Käsebrote gemäß Beispiel 1 wurden nach einer Reifungsdauer von 6 Wochen beurteilt.

Zu diesem Zweck wurden 4 Stichproben entnommen und einer Beurteilung nach der Käseverordnung unterworfen.

Nach diesem Beurteilungsverfahren werden das äußere Aussehen, das innere Aussehen, die Konsistenz, der Geruch und der Geschmack des Käses bewertet und mit den Solleigenschaften verglichen.

Die Solleigenschaften für Tilsiterkäse nach der Käseverordnung sind in Tabelle II angegeben:

### Tabelle II

#### Beurteilung nach Käse-VO

| Aussehen - Äußeres | Aussehen - Inneres und Konsistenz- | Geruch/Geschmack |
|---|---|---|
| Gut angetrocknete Schmiere, auch nach abgeschlossener Reifung gewaschen, auch rindenlos | Elfenbeinfarbig bis hellgelb, Löcher von Schlitz- oder Gerstenform, auch runde Löcher daneben, Teig geschmeidig, jedoch nicht kurz oder bröckelig | Leicht herb bis pikant, auch säuerlich, jedoch nicht sauer |

Für die oben angegebenen Parameter können jeweils maximal 5 Punkte vergeben werden. Ein Käse darf als Markenkäse bezeichnet werden, wenn er für jede zu bewertende Eigenschaft mindestens 4 Punkte erreicht.

Die vier Käsebrote wurden von der in Tabelle III angegebenen Anzahl sachkundiger Personen jeweils einzeln unter den oben angegebenen Kriterien bewertet. Die Ergebnisse sind in Tabelle III wiedergegeben.

Sie zeigen, daß mit dem erfindungsgemäßen Verfahren ein Tilsiterkäse hergestellt werden kann, der von konventionellem Tilsiter bezüglich des äußeren und inneren Aussehens sowie der Konsistenz nicht zu unterscheiden ist und dessen Geruch und Geschmack die Anforderungen an einen Markenkäse erfüllen.

### Tabelle III

#### Mittlere Punktzahl

| Probe Nr. | Gesamtzahl Beurteilungen | Aussehen außen | Aussehen innen | Konsistenz | Geruch | Geschmack |
|---|---|---|---|---|---|---|
| I | 11 | 5,0 | 4,64 | 4,82 | 4,54 | 4,27 |
| II | 19 | 5,0 | 4,84 | 5,0 | 4,63 | 4,21 |
| III | 16 | 5,0 | 4,75 | 4,93 | 4,69 | 4,31 |
| IV | 16 | 5,0 | 4,75 | 5,0 | 4,69 | 3,75 |
| Mittelwert | | 5,0 | 4,8 | 4,9 | 4,7 | 4,1 |

**Patentansprüche**

1. Verfahren zur Herstellung von Tilsiter und Käse nach Tilsiterart durch
   (I) Dicklegen von Kesselmilch,
   (II) Zerkleinern, Abpressen und Formen des Käsebruchs sowie Salzen der Käselaibe und

8

(III) Reifen der geformten Käselaibe zur Bildung des typischen-Tilsiteraromas,
dadurch gekennzeichnet, daß man in Stufe (I) der Kesselmilch Lactobacillen in einer Menge von $10^3$ bis $10^8$ Zellen/ml Kesselmilch zusetzt und in Stufe (III) die geformte Käsemasse unmittelbar im Anschluß an die Salzbehandlung unter mildem Vakuum in eine Folie verpackt, die eine $O_2$-Durchlässigkeit von 80 bis 600 cm³/m² x d x bar, eine $CO_2$-Durchlässigkeit von 300 bis 3000 cm³/m² x d x bar jeweils gemessen nach Oxtran und eine Wasserdampfdurchlässigkeit von maximal 25 g/m²·d gemessen nach ASTM (ASTM-Norm Nr. E96-63T) bei 38°C und 90% relativer Feuchte aufweist.

2.  Verfahren nach Anspruch 1, **dadurch gekennzeichnet**, daß man der Kesselmilch in Stufe (I) als Lactobacillen L. helveticus und/oder L. delbrückii Subspecies bulgaricus oder Subspecies lactis zusetzt.

3.  Verfahren nach den Ansprüchen 1 oder 2, **dadurch gekennzeichnet**, daß man in Stufe (I) der Kesselmilch ferner Bakterien der Gattung Brevibacterium und/oder Athrobacter in einer Menge von $10^3$ bis $10^8$ Zellen/ml Kesselmilch zusetzt.

4.  Verfahren nach Anspruch 3, **dadurch gekennzeichnet**, daß man als Bakterien der Gattung Brevibacterium B. linens und/oder B. casei verwendet.

5.  Verfahren nach den Ansprüchen 1 bis 4, **dadurch gekennzeichnet**, daß man in Stufe (I) der Kesselmilch zusätzlich Geotrichum und/oder Hefen jeweils in einer Menge von $10^2$ bis $10^6$ Zellen/ml Kesselmilch beimischt.

6.  Verfahren nach Anspruch 5, **dadurch gekennzeichnet**, daß man als Geotrichum G. candidum verwendet.

7.  Verfahren nach den Ansprüchen 5 oder 6, **dadurch gekennzeichnet**, daß man als Hefen Debaromyces hansenii verwendet.

8.  Verfahren nach den Ansprüchen 1 bis 7, **dadurch gekennzeichnet**, daß man in Stufe (I) der Kesselmilch L. helveticus in einer Menge von $10^3$ bis $10^7$ Zellen/ml, Brevibacterium linens in einer Menge von $10^3$ bis $10^7$ Zellen/ml und Geotrichum candidum in einer Menge von $10^2$ bis $10^5$ Zellen/ml zusetzt.

9.  Verfahren nach den Ansprüchen 1 bis 8, **dadurch gekennzeichnet**, daß man in Stufe (III) eine schrumpfbare Folie mit einer Schrumpfrate von 10 bis 60% verwendet.

10. Verfahren nach den Ansprüchen 1 bis 9, **dadurch gekennzeichnet**, daß man in Stufe (III) eine Laminatfolie aus mindestens zwei Schichten verwendet.

11. Verfahren nach Anspruch 10, **dadurch gekennzeichnet**, daß man in Stufe (III) eine Laminatfolie aus 4 oder 6 Schichten verwendet.

12. Verfahren nach den Anspruch 11, **dadurch gekennzeichnet**, daß man eine vierschichtige Laminatfolie verwendet, deren innere Schicht (A) aus einem Copolymeren von VLDPE und 7 bis 25 Gew.%, bezogen auf das Copolymere, eines $\alpha$-Olefins, deren Mittelschicht (B) aus Ethylenvinylacetat mit 5 bis 30% Vinylacetat und deren Mittelschicht (C) im wesentlichen aus einem VDC-VC-Copolymeren mit 15 bis 30% Vinylchlorid sowie üblichen Zusätzen bestehen und deren Außenschicht (A) in ihrer Zusammensetzung der Mittelschicht (B) entspricht.

13. Verfahren nach den Ansprüchen 9 bis 12, **dadurch gekennzeichnet**, daß die Folie eine $O_2$-Durchlässigkeit von 100 bis 300, vorzugsweise von 150 bis 200 und eine $CO_2$-Durchlässigkeit von 900 bis 1300, vorzugsweise von 1000 bis 1200 cm³/m² x d x bar, eine Wasserdampfdurchlässigkeit von 9 bis 13, vorzugsweise von 11 bis 12 g/m² x d, sowie eine Schrumpfrate von 30 bis 40, vorzugsweise 35% in Längsrichtung und 40 bis 50, vorzugsweise 45% in Querrichtung aufweist.

**Claims**

1.  A process for the production of Tilsiter and Cheese of a Tilsiter type by
    (I) curdling tank milk,
    (II) cutting, pressing and shaping the cheese curds and salting the cheese loaf and
    (III) ripening the shaped cheese loaves to give the typical Tilsiter flavour,

characterized in that in stage (I) lactobacilli are added to the tank milk in an amount of $10^3$ to $10^8$ cells/ml of tank milk and in stage (III) the shaped cheese loaf is packaged immediate-ly following salt treatment under a mild vacuum in a film which has an $O_2$ permeability of 80 to 600 $cm^3/m^2$ x d x bar, a $CO_2$ permeability of 300 to 3000 $cm^3/m^2$ x d x bar each (in Oxtran measurements) and a water vapor permeability of a maximum of 25 $g/m^2$ x d in ASTM measurements (ASTM standard No. E96-63T) at 38°C and 90% relative moisture.

2. A process according to claim 1, characterized in that in stage (I) L. helveticus and/or L. delbrueckii subspec. bulgaricus or subspec. lactis are added to the tank milk as the lactobacilli.

3. A process according to claims 1 or 2, characterized in that in stage (I) bacteria of the genus brevibacterium and/or athrobacter are added to the tank milk in an amount of $10^3$ to $10^8$ cells/ml of tank milk.

4. A process according to claim 3, characterized in that B.linens and/or B.casei are used as the bacteria of the genus brevibacterium.

5. A process according to claims 1 to 4, characterized in that in stage (I) in addition geotrichum and/or yeasts are admixed with the tank milk each in an amount of $10^2$ to $10^6$ cells/ml of tank milk.

6. A process according to claim 5, characterized in that G. candidum is used as the geotrichum.

7. A process according to claim 5 or 6, characterized in that Debaromyces hansenii is used as the yeast.

8. A process according to claims 1 to 7, characterized in that in stage (I) L. helveticus in an amount of $10^3$ to $10^7$ cells/ml, Brevibacterium linens in an amount of $10^3$ to $10^7$ cells/ml and Geotrichum candidum in an amount of $10^2$ to $10^5$ cells/ml are added to the tank milk.

9. A process according to claims 1 to 8, characterized in that in stage (III) a shrinkable film with a shrinkage rate of 10 to 60% is used.

10. A process according to claims 1 to 9, characterized in that in stage (III) a laminate film of at least two layers is used.

11. A process according to claim 10, characterized in that in stage (III) a laminate film of four or six layers is used.

12. A process according to claim 11, characterized in that a four-laminate film is used, the inner layer (A) being of a copolymer of VLDPE and 7 to 25 % by weight, calculated on the copolymer, of an alpha-olefin, the middle layer (B) being of ethylenevinylacetate with 5 to 30% vinylacetate and the middle layer (C) being essentially of a VDC-VC copolymer with 15 to 30 % vinylchloride and the usual additives and the outer layer (A) corresponding in its composition with the middle layer (B).

13. A process according to claims 9 to 12, characterized in that the film has an $O_2$ permeability of 100 to 300, preferably 150 to 200, and a $CO_2$ permeability of 900 to 1300, preferably from 1000 to 1200 $cm^3/m^2$ x d x bar, a water vapor permeability of 9 to 1433, preferably from 11 to 12 $g/m^2$ x d, and a shrinkage rate of 30 to 40%, preferably 35% longitudinally and 40 to 50%, preferably 45% transversely.

## Revendications

1. Procédé pour la production de Tilsit et de fromages du type Tilsit
   (I) en épaississant du lait bouilli,
   (II) en broyant, pressant et formant les morceaux obtenus de fromage et en salant la meule de fromage et
   (III) en faisant mûrir la meule en forme de fromage pour obtenir l'arôme typique du Tilsit,
   caractérisé en ce qu'à l'étape (I), on ajoute au lait bouilli des lactobacilles en une quantité de $10^3$ à $10^8$ cellules/ml et, à l'étape (III), la masse de fromage en forme est directement emballée à la suite du traitement au sel, sous un vide modéré, dans une feuille qui présente une perméabilité à $O_2$ de 80 à 600 $cm^3/m^2$x d x bar, une perméabilité à $CO_2$ de 300 à 3.000 $cm^3/m^2$ x d x bar, en mesurant selon l'oxtrane et une perméabilité à la vapeur d'eau qui est au maximum de 25 $g/m^2$·d en mesurant selon ASTM (ASTM Norme N° E96-63T) à 38°C et 90% d'humidité relative.

2. Procédé selon la revendication 1, caractérisé en ce que l'on ajoute,au lait bouilli de l'étape (I), en tant que lactobacilles, L. helveticus et/ou L. delbrückii sous-espèce bulgaricus ou bien sous-espèce lactis.

3. Procédé selon les revendications 1 ou 2, caractérisé en ce qu'à l'étape (I), on ajoute de plus,au lait bouilli, d'autres bactéries du type Brevibacterium et/ou Arthrobacter en une quantité de $10^3$ à $10^8$ cellules/ml de lait.

4. Procédé selon la revendication 3, caractérisé en ce qu'on utilise en tant que bactéries du type Brevibacterium, B. linens et/ou B. casei.

5. Procédé selon les revendications 1 à 4, caractérisé en ce qu'à l'étape (I), on mélange de plus,au lait, Geotrichum et/ou de la levure en une quantité de $10^2$ à $10^6$ cellules/ml de lait.

6. Procédé selon la revendication 5, caractérisé en ce qu'on utilise,en tant que Geotrichum, G. candidum.

7. Procédé selon les revendications 5 ou 6, caractérisé en ce qu'on utilise, en tant que levure, Debaromyces hansenii.

8. Procédé selon les revendications 1 à 7, caractérisé en ce qu'à l'étape (I), on ajoute,au lait,L. helveticus en une quantité de $10^3$ à $10^7$ cellules/ml, Brevibacterium linens en une quantité de $10^3$ à $10^7$ cellules/ml et Geotrichum candidum en une quantité de $10^2$ à $10^5$ cellules/ml.

9. Procédé selon les revendications 1 à 8, caractérisé en ce qu'à l'étape (III), on utilise une feuille rétractable avec un taux de rétrécissement de 10 à 60%.

10. Procédé selon les revendications 1 à 9, caractérisé en ce qu'à l'étape (III), on utilise une feuille laminée d'au moins deux couches.

11. Procédé selon la revendication 10, caractérisé en ce qu'à l'étape (III), on utilise une feuille laminée de 4 ou 6 couches.

12. Procédé selon la revendication 11, caractérisé en ce qu'on utilise une feuille laminée à quatre couches, dont la couche interne (A) est formée d'un copolymère de VLDPE et de 7 à 25% en poids,en se rapportant au copolymère, d'une $\alpha$-oléfine, dont la couche moyenne (B) se compose d'éthylène-acétate de vinyle avec 5 à 30% d'acétate de vinyle et dont la couche moyenne (C) se compose principalement d'un copolymère VDC-VC avec 15 à 30% de chlorure de vinyle ainsi que les additifs habituels et dont la couche externe (A) correspond,par sa composition, à la couche moyenne (B).

13. Procédé selon l'une quelconque des revendications 9 à 12, caractérisé en ce que la feuille présente une perméabilité à $O_2$ de 100 à 300, avantageusement de 150 à 200 et une perméabilité à $CO_2$ de 900 à 1.300, avantageusement de 1.000 à 1.200 cm³/m² x d x bar , une perméabilité à la vapeur d'eau de 9 à 13, avantageusement de 11 à 12 g/m² x d, ainsi qu'un taux de rétrécissement de 30 à 40, avantageusement de 35%, en direction longitudinale et de 40 à 50, avantageusement de 45%,en direction transversale.